# FASCICULE DE BREVET EUROPEEN

(11) **EP 1 568 035 B1**
(45) Date de publication et mention de la délivrance du brevet: **07.02.2007**
(21) Numéro de dépôt: 03780219.6
(22) Date de dépôt: 13.10.2003
(51) Int. Cl.: G11B 33/04

(54) **DISPOSITIF DE RANGEMENT, NOTAMMENT POUR DISQUES**
AUFBEWAHRUNGSANORDNUNG, INSBESONDERE FÜR PLATTEN
STORAGE DEVICE, IN PARTICULAR FOR DISC MEDIA

(30) Priorité: 16.10.2002 FR 0212885
(43) Date de publication de la demande: 31.08.2005
(73) Titulaire: Demeaux, Vincent, 75018 Paris (FR)
(72) Inventeur: Demeaux, Vincent, 75018 Paris (FR)
(74) Mandataire: Neyret, Daniel Jean Marie
(86) Numéro de dépôt international: PCT/FR2003/003014
(87) Numéro de publication internationale: WO 2004/036585

(56) Documents cités:
- WO-A-00/55858
- WO-A-97/25715
- FR-A- 2 812 115
- US-A1- 2002 139 763

## Description

L'invention concerne les dispositifs de rangement d'objets divers, et en particulier, mais pas exclusivement, les objets minces tels que les disques compacts et les microsillons.

Les disques compacts musicaux, vidéo (DVD) et les CD-ROM sont habituellement rangés dans des étuis en plastique dont l'ouverture n'est pas toujours aisée pour de jeunes enfants ou des personnes âgées. L'expérience montre que beaucoup d'utilisateurs ne rangent pas systématiquement dans leurs étuis les disques dont ils se servent le plus souvent, ou dont ils ont besoin de se saisir rapidement, par exemple lors d'une fête pour enchaîner rapidement l'écoute. Si les disques sont simplement posés sur une table, il y a un risque important qu'ils soient rayés, au moment de leur pose ou ultérieurement.

Les dispositifs de rangement de disques compacts existants sont inadaptés à la résolution de ce problème.

Les tours et boîtiers nécessitent que le disque soit rangé dans son étui. De plus, seule la tranche de cet étui est visible, ce qui ne facilite pas le repérage du disque dont l'utilisateur a besoin. Enfin, ces dispositifs de rangement sont relativement encombrants, du fait qu'ils sont adaptés aux dimensions des étuis et non à celles des disques eux-mêmes, et qu'en général ils ont une capacité importante, excessive lorsque l'utilisateur désire simplement conserver à portée de main les quelques disques dont il se sert le plus souvent.

Un autre type de dispositif de rangement est constitué par des pochettes en plastique souple à compartiments multiples dans lesquels les disques sont insérés. Cette solution permet de réduire l'encombrement du dispositif de rangement, mais n'évite pas à l'utilisateur de devoir procéder à plusieurs manipulations, d'abord pour trouver le disque recherché parmi tous ceux que renferme la pochette, ensuite pour l'extraire du compartiment puis l'y ranger. Ces dernières manipulations présentent un risque de détérioration du disque, et là encore, sont peu commodes pour de jeunes enfants et des personnes âgées, ou des personnes impatientes.

Les problèmes dont on vient de parler trouvent leurs équivalents dans la manipulation des disques microsillons, dont l'extraction de leur pochette est fastidieuse et délicate.

WO-A-97/25715 reflète le preambule de la revendication 1, et décrit un dispositif de rangement pour étuis de supports d'informations, pourvu d'éléments de séparation et d'indexation n'assurant pas le maintien des étuis. WO-A-00/55858 décrit un dispositif de rangement pour CD dont une variante comporte des moyens de rétention constitués par une couche épaisse présentant des fentes parallèles. FR-A-2 812 115 décrit un dispositif de maintien de CD constitué par une simple bande rigide pliée en accordéon.

Le but de l'invention est de proposer aux utilisateurs d'objets minces, tels que des disques compacts ou microsillons, un dispositif de rangement procurant une accessibilité aisée et rapide à ceux de leurs disques qu'ils sont susceptibles d'utiliser le plus souvent, dans des conditions de protection correctes.

A cet effet, l'invention a pour objet un dispositif de rangement, notamment pour disques, caractérisé en ce qu'il comporte :
- un socle dont quatre parois, à savoir une paroi avant, une paroi arrière et deux parois latérales, définissent une gorge;
- et un ou des éléments de séparation, destinés à être insérés dans ladite gorge, et composés chacun d'une âme en un matériau rigide, revêtue sur au moins une de ses faces par un matériau compressible, et enveloppés dans un matériau non agressif pour les objets à ranger, ledit matériau compressible ayant une forme bombée avec une surépaisseur dans sa partie médiane.

De préférence ledit socle comporte également une paroi constituant un fond pour ladite gorge.

Ladite paroi constituant le fond de ladite gorge et le bord supérieur de l'une au moins desdites parois avant et arrière peuvent présenter une forme convexe.

Ladite paroi arrière peut présenter une hauteur plus importante que celle de ladite paroi avant.

L'arête tournée vers la gorge d'au moins l'une des parois avant et arrière du socle peut présenter une échancrure dont la courbure épouse celle de la périphérie d'un disque.

Le ou lesdits éléments de séparation peuvent comporter chacun une âme allongée en un matériau rigide, présentant des lignes de pliage transversales conformée en accordéon revêtue sur une de ses faces par un matériau compressible et sont enveloppés dans un matériau non agressif pour les objets à ranger.

Lesdites parois latérales du socle peuvent être inclinées d'un même angle par rapport à la verticale.

Lesdites lignes de pliage transversales peuvent alors être réparties sur l'âme de l'élément de séparation de manière à définir une alternance de pans courts et de pans longs sur ledit élément de séparation.

Ledit socle et lesdits éléments de séparation peuvent être séparables.

Comme on l'aura compris, le dispositif de rangement selon l'invention comporte deux éléments essentiels :
- un socle dont quatre parois définissent une gorge ;
- et des éléments de séparation composés chacun d'une âme rigide revêtue sur au moins une de ses faces par un matériau compressible, l'ensemble étant enveloppé dans un matériau non agressif pour les objets à ranger.

Les objets à ranger sont insérés entre les éléments de séparation, et y sont maintenus grâce à l'effort de compression qu'ils exercent sur le matériau revêtant l'âme rigide.

Dans une forme de réalisation préférée, les éléments de séparation sont constitués par un élément unique de grande longueur, conformé en accordéon grâce à des lignes de pliage transversales ménagées sur l'âme rigide.

L'invention sera mieux comprise à la lecture de la description qui suit, donnée en référence aux figures annexées suivantes :
- la figure 1 qui représente, vus en perspective et séparément, un socle (figure 1 a) et un élément de séparation conformé en accordéon (figure 1 b) d'un dispositif de rangement selon l'invention, l'élément de séparation étant vu en coupe longitudinale sur la figure 1 c ;
- la figure 2 qui représente le dispositif de la figure 1 en cours d'utilisation ;
- la figure 3 qui représente vu en perspective et en coupe longitudinale un autre exemple d'élément de séparation pouvant être placé dans le socle ;
- la figure 4 qui représente, vu en coupe transversale, un autre exemple de dispositif de rangement selon l'invention ;
- la figure 5 qui représente, vu en perspective, un autre exemple de dispositif de rangement selon l'invention ;
- la figure 6 qui représente, vu de profil, un autre exemple de dispositif de rangement selon l'invention.

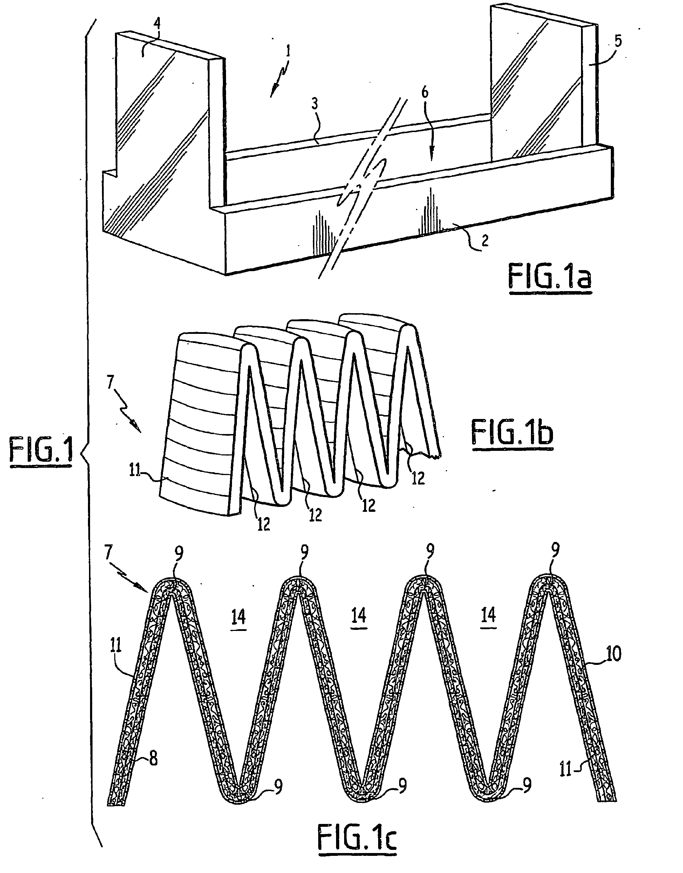

L'exemple de dispositif de rangement selon l'invention représenté sur la figure 1 se compose de deux éléments distincts, susceptibles d'être ou non solidarisés l'un à l'autre par tout moyen définitif ou temporaire : collage, ruban adhésif, velours crochet (VELCRO®)...

Le premier élément (figure 1 a) est un socle 1 défini par quatre parois : une paroi avant 2, une paroi arrière 3 et deux parois latérales 4, 5. Ces parois 2 à 5 peuvent être des pièces séparées assemblées les unes aux autres pour constituer le socle 1, où, comme représenté, constituer des portions d'une pièce unique. Elles définissent entre elles une gorge 6 dont le fond (non visible sur la figure 1a) est constitué par une paroi supplémentaire. En variante, une telle paroi supplémentaire peut être absente, et le fond de la gorge est alors délimité par la surface sur laquelle le socle 1 est posé.

Le deuxième élément (figures 1 b et 1 c) est un élément de séparation 7 conformé en accordéon. Il est constitué par :
- une âme 8 en un matériau rigide, tel que du carton, présentant une forme allongée et une série de lignes de pliage transversales 9 permettant de conférer à l'élément 7 sa forme en accordéon ; son épaisseur peut être, par exemple, de l'ordre de 1 mm ;
- une couche 10 d'un matériau compressible tel que de la ouate, déposée sur une face de l'âme 8 ; son épaisseur peut être, par exemple, de l'ordre de quelques mm ;
- une enveloppe 11 qui enserre l'ensemble sur toute sa surface; sur la figure 1 b on voit la jointure longitudinale 12 entre les deux bords extérieurs de la feuille de matériau constituant l'enveloppe 11 ; comme c'est cette enveloppe qui est appelée à être au contact des objets à ranger dans le dispositif, elle doit être en un matériau non agressif pour eux : par exemple, un velours viscose-acétate est particulièrement indiqué pour le rangement des disques compacts ou microsillons ; un tel velours est fabriqué, notamment, par la firme DENHOLME VELVETS Ltd sous la référence PAN 8940 CD.

De préférence, comme représenté sur la figure 1b, on confère au matériau compressible 10 une forme bombée, avec une surépaisseur dans sa zone médiane. Celle-ci a un rôle prédominant dans le maintien des objets.

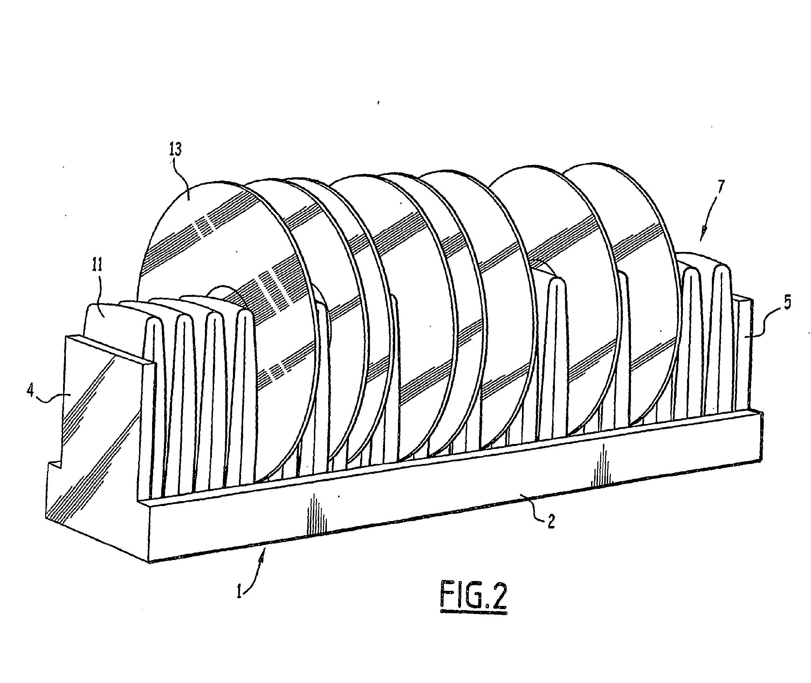

Sur la figure 2, on a représenté l'élément de séparation 7 inséré dans la gorge 6 du socle 1 et des disques compacts 13 insérés dans les espaces 14 ouverts vers le haut définis par les différentes portions de l'élément de séparation 7. La longueur de l'élément de séparation 7 est choisie de telle sorte que lorsque l'élément de séparation 7 est inséré dans la gorge 6, les espaces 14 ont une largeur réduite, voire nulle, permettant que les disques 13 puissent y être, d'une part, insérés et, d'autre part, maintenus sous l'effet de la résistance à la compression opposée par le matériau 10. Les disques 13 viennent en appui contre les arêtes des faces avant 2 et arrière 3 du socle 1, et peuvent être retirés instantanément de l'élément de rangement par une simple traction.

L'élément de séparation 7 en accordéon peut être unique, ou on peut placer dans la gorge 6 une pluralité de tels éléments 7 les uns à la suite des autres.

On peut également prévoir que l'âme 8 soit renforcée au niveau des deux pans d'extrémité de l'élément 7 pour améliorer la tenue et la rigidité de l'ensemble et rendre ainsi superflu le fait de conférer aux parois latérales 4, 5 du socle 1 une hauteur importante.

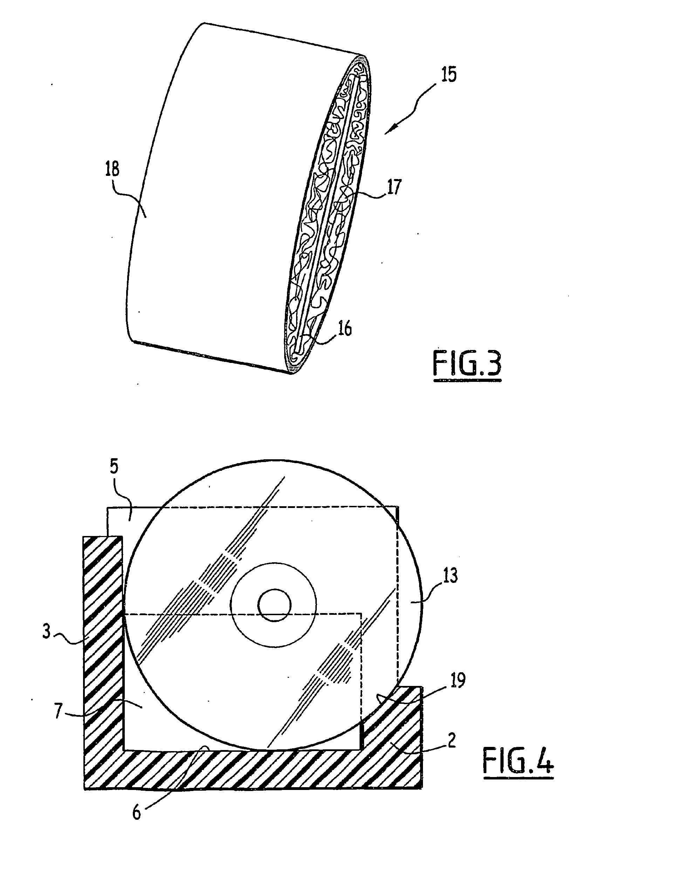

On peut également remplacer l'élément de séparation 7 en accordéon par une multiplicité d'éléments de séparation unitaires 15 tels que celui représenté sur la figure 3, placés les uns contre les autres de manière à remplir la gorge 6. Ces éléments de séparation unitaires 15 sont constitués par une âme 16 formée d'une plaque en un matériau rigide, revêtue sur l'une ou (comme représenté) deux de ses faces par un matériau compressible 17, l'ensemble étant enveloppé dans une feuille 18 d'un matériau non agressif vis-à-vis des objets à placer entre les éléments de séparation. De préférence, ils sont séparables du socle 1 par l'utilisateur. De cette façon, en faisant varier le nombre d'éléments de séparation 15 utilisés dans un même socle 1, l'utilisateur peut choisir le nombre d'objets que l'on peut ranger dans le dispositif, et aussi la pression à laquelle ils sont soumis pendant leur stockage.

D'autres variantes du dispositif selon l'invention peuvent être imaginées.

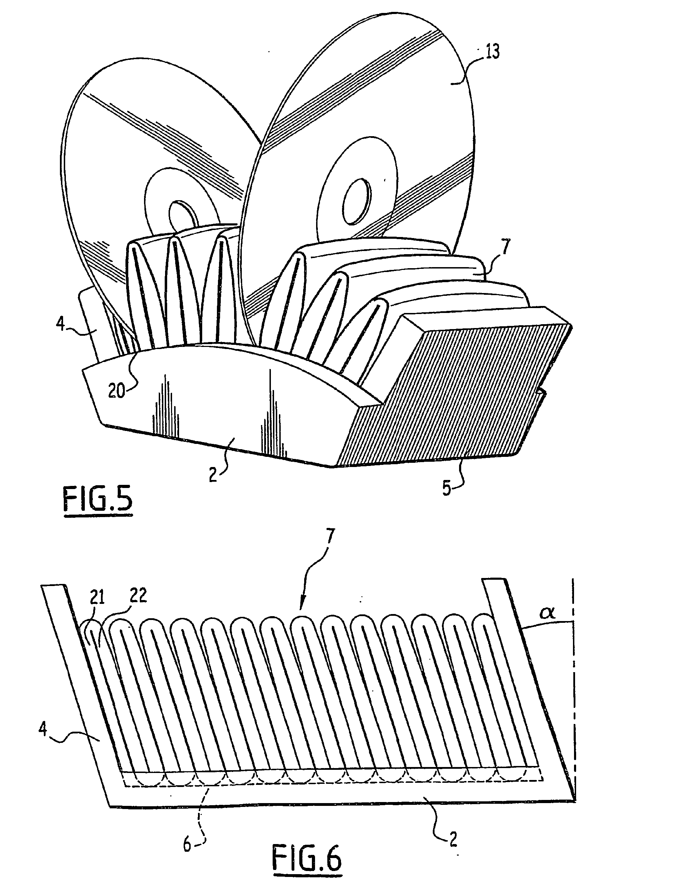

On peut, par exemple, comme représenté sur la figure 4, conférer à la paroi arrière 3 du socle 1 une hauteur plus grande que celle de la paroi avant 2. La paroi arrière 3 peut ainsi servir de butée lors de l'insertion des disques 13 dans le dispositif de rangement.

Sur la figure 4, on a également représenté la paroi avant 2 pourvue, sur son arête tournée vers la gorge 6, d'une échancrure 19 dont la courbure épouse celle de la périphérie du disque 13. Cette configuration non obligatoire procure un meilleur maintien du disque 13 dans le dispositif de rangement.

Une autre variante de l'invention, représentée sur la figure 5, consiste à conférer au fond de la gorge 6 et aux bords supérieurs 20 des parois avant 2 et arrière 3 (ou seulement au bord supérieur 20 de la face avant 2, en particulier si la face arrière 3 a une hauteur supérieure à celle de la face avant 2) une forme convexe. De cette façon, les éléments de séparation 7 ou 15 forment un éventail, ce qui confère aux disques 13 une disposition similaire qui rend plus lisibles les inscriptions qu'ils portent et facilite ainsi leur repérage par l'utilisateur. De préférence, les parois latérales 4, 5 présentent une inclinaison telle qu'elles contribuent à la mise en éventail du ou des éléments de séparation 7, 15.

Une autre variante de l'invention, représentée sur la figure 6, consiste à incliner les parois latérales 4, 5 par rapport à la verticale selon un même angle α qui est communiqué à l'élément 7 ou aux éléments 15 de séparation. Cela peut permettre, là encore, une meilleure visibilité des inscriptions portées sur les disques et procure un effet esthétique attractif. De préférence, si on utilise un élément de séparation 7 en accordéon, cet effet est assisté si les lignes de pliage 9 ne sont pas espacées uniformément, mais définissent une alternance de pans courts 21 et de pans longs 22 sur l'élément en accordéon 7.

Bien entendu, des caractéristiques des différentes variantes qui viennent d'être décrites peuvent être combinées lorsqu'elles sont compatibles les unes avec les autres. Par exemple, l'échancrure 19 présente sur la variante de la figure 4 peut être présente sur les arêtes des parois avant 2 et/ou arrière 3 de toutes les variantes décrites et représentées.

Réaliser l'enveloppe extérieure 11, 18 des éléments de séparation 7, 15 en un matériau tel que le velours viscose-acétate, qui est doux, non pelucheux et apte à retenir la poussière, permet de réaliser un nettoyage du disque avant de le sortir du dispositif de rangement. Pour cela, il suffit d'imprimer au disque un mouvement de rotation. A cet effet, il est donc préférable que les éléments de séparation 7, 15 aient une hauteur telle qu'ils couvrent la largeur de la couronne enregistrée du disque.

Comme on l'a dit, le dispositif de rangement selon l'invention est bien adapté au rangement de toutes sortes de disques : microsillons, CD, CD-ROM etc.... Il va de soi qu'il peut être utilisé pour le rangement d'autres articles, notamment d'articles minces tels que des enveloppes, ou des fiches cartonnées.

## Revendications

1. Dispositif de rangement, notamment pour disques (13), comportant:
- un socle (1) dont quatre parois, à savoir une paroi avant (2), une paroi arrière (3) et deux parois latérales (4, 5), définissent une gorge (6);
- et un ou des éléments de séparation (7 ;15) destinés à être insérés dans ladite gorge (6), **caractérisé en ce que** le ou lesdits éléments de séparation son composés chacun d'une âme (8 ;16) en un matériau rigide, revêtue sur au moins une de ses faces par un matériau compressible (10 ;17), et enveloppés dans un matériau (11 ;18) non agressif pour les objets (13) à ranger et **en ce que** ledit matériau compressible (10;17) a une forme bombée, avec une surépaisseur dans sa partie médiane.

2. Dispositif selon la revendication 1, **caractérisé en ce que** ledit socle (1) comporte également une paroi constituant un fond pour ladite gorge (6).

3. Dispositif selon la revendication 2, **caractérisé en ce que** ladite paroi constituant le fond de ladite gorge (6) et le bord supérieur (20) de l'une au moins desdites parois avant (2) et arrière (3) présentent une forme convexe.

4. Dispositif selon l'une des revendications 1 à 3, **caractérisé en ce que** ladite paroi arrière (3) présente une hauteur plus importante que celle de ladite paroi avant (2).

5. Dispositif selon l'une des revendications 1 à 4, **caractérisé en ce que** l'arête tournée vers la gorge (6) d'au moins l'une des parois avant (2) et arrière (3) du socle (1) présente une échancrure (19) dont la courbure épouse celle de la périphérie d'un disque (13).

6. Dispositif selon l'une des revendications 1 à 5, **caractérisé en ce que** le ou lesdits éléments de séparation (7) comportent chacun une âme (8) allongée en un matériau rigide, présentant des lignes de pliage transversales (9) conformée en accordéon revêtue sur une de ses faces par un matériau compressible (10) et sont enveloppés dans un matériau (11) non agressif pour les objets à ranger.

7. Dispositif selon l'une des revendications 1 à 6, **caractérisé en ce que** lesdites parois latérales (4, 5) du socle (1) sont inclinées d'un même angle (α) par rapport à la verticale.

8. Dispositif selon les revendications 6 et 7, **caractérisé en ce que** lesdites lignes de pliage transversales (9) sont réparties sur l'âme (8) de l'élément de séparation (7) de manière à définir une alternance de pans courts (21) et de pans longs (22) sur ledit élément de séparation (7).

9. Dispositif selon l'une des revendications 1 à 8, **caractérisé en ce que** ledit socle et lesdits éléments de séparation sont séparables.

## Claims

1. Storage device, in particular for disc media (13), comprising:
- a base (1) whose four walls, namely a front wall (2), a rear wall (3) and two side walls (4, 5), define a groove (6), and
- one or more separation elements (7; 15) designed to be inserted in said groove (6), **characterized in that** said separation element or elements are each composed of a core (8; 16) made of a rigid material, covered on at least one of its faces with a compressible material (10; 17), and enveloped in a material (11; 18) that is not aggressive for the objects (13) to be stored, and **in that** said compressible material (10; 17) has a domed shape, being thickest in its middle.

2. Device according to Claim 1, **characterized in that** said base (1) also comprises a wall constituting a bottom wall for said groove (6).

3. Device according to Claim 2, **characterized in that** said wall constituting the bottom wall of said groove (6) and the upper edge (20) of at least one of said front (2) and rear (3) walls have a convex shape.

4. Device according to one of Claims 1 to 3, **characterized in that** said rear wall (3) is higher than said front wall (2).

5. Device according to one of Claims 1 to 4, **characterized in that** the edge facing the groove (6) of at least one of the front (2) and rear (3) walls of the base (1) has a bevelled face (19) whose curve matches that of the periphery of a disc (13).

6. Device according to one of Claims 1 to 5, **characterized in that** said separation element or elements (7) each comprise an elongate core (8) made of a rigid material, having accordion-like transverse fold lines (9) and covered on one of its faces with a compressible material (10), and are enveloped in a material (11) that is not aggressive for the objects to be stored.

7. Device according to one of Claims 1 to 6, **characterized in that** said side walls (4, 5) of the base (1) are inclined by the same angle (α) with respect to the vertical.

8. Device according to Claims 6 and 7, **characterized in that** said transverse fold lines (9) are spaced along the core (8) of the separation element (7) so as to define alternating short sides (21) and long sides (22) along said separation element (7).

9. Device according to one of Claims 1 to 8, **characterized in that** said base and said separation elements are separable.

## Patentansprüche

1. Aufbewahrungsvorrichtung, insbesondere für Disks (13), die umfasst:
- eine Basis (4), wovon vier Wände, nämlich eine vordere Wand (2), eine hintere Wand (3) und zwei Seitenwände (4, 5), eine Kehle (6) definieren; und
- ein oder mehrere Trennelemente (7; 15), die dazu vorgesehen sind, in die Kehle (6) eingesetzt zu werden,
**dadurch gekennzeichnet, dass** das eine oder die mehreren Trennelemente jeweils aus einem Kern (8; 16) aus einem starren Material, der auf wenigstens einer seiner Flächen mit einem komprimierbaren Material (10; 17) beschichtet ist, gebildet sind und in ein Material (11; 18), das die aufzubewahrenden Gegenstände (13) nicht angreift, eingehüllt sind und dass das komprimierbare Material (10; 17) eine ausgebauchte Form mit einer Überdicke im Mittelteil hat.

2. Vorrichtung nach Anspruch 1, **dadurch gekennzeichnet, dass** die Basis (1) außerdem eine Wand umfasst, die einen Boden der Kehle (6) bildet.

3. Vorrichtung nach Anspruch 2, **dadurch gekennzeichnet, dass** die den Boden der Kehle (6) bildende Wand und der obere Rand (20) der vorderen Wand (2) und/oder der hinteren Wand (3) eine konvexe Form aufweisen.

4. Vorrichtung nach einem der Ansprüche 1 bis 3, **dadurch gekennzeichnet, dass** die hintere Wand (3) eine Höhe hat, die größer als jene der vorderen Wand (2) ist.

5. Vorrichtung nach einem der Ansprüche 1 bis 4, **dadurch gekennzeichnet, dass** die zu der Kehle (6) gewandte Kante der vorderen Wand (2) und/oder der hinteren Wand (3) der Basis (1) einen bogenförmigen Ausschnitt (19) aufweist, dessen Krümmung an jene des Umfangs einer Disk (13) angepasst ist.

6. Vorrichtung nach einem der Ansprüche 1 bis 5, **dadurch gekennzeichnet, dass** das oder die Trennelemente (7) jeweils einen lang gestreckten Kern (8) aus einem starren Material, der akkordeonähnliche transversale Faltlinien (9) aufweist und auf einer seiner Flächen mit einem komprimierbaren Material (10) beschichtet ist, umfassen und in ein Material (11), das die aufzubewahrenden Gegenstände nicht angreift, eingehüllt ist.

7. Vorrichtung nach einem der Ansprüche 1 bis 6, **dadurch gekennzeichnet, dass** die Seitenwände (4, 5) der Basis (1) in Bezug auf die Vertikale um denselben Winkel (α) geneigt sind.

8. Vorrichtung nach den Ansprüchen 6 und 7, **dadurch gekennzeichnet, dass** die transversalen Faltlinien (9) auf dem Kern (8) des Trennelements (7) in der Weise verteilt sind, dass in dem Trennelement (7) abwechselnd kurze Fächer (21) und lange Fächer (22) definiert werden.

9. Vorrichtung nach einem der Ansprüche 1 bis 8, **dadurch gekennzeichnet, dass** die Basis und die Trennelemente voneinander ablösbar sind.
